# FASCICULE DE BREVET EUROPEEN

(11) **EP 3 213 255 B1**
(45) Date de publication et mention de la délivrance du brevet: **02.09.2020**
(21) Numéro de dépôt: 15808699.1
(22) Date de dépôt: 27.10.2015
(51) Int. Cl.: B41K 1/08, H04N 1/32, G06K 9/00

(54) **DISPOSITIF ET PROCÉDÉ D'ENREGISTREMENT D'UN DOCUMENT PRÉSENTANT UN MARQUAGE**
VORRICHTUNG UND VERFAHREN ZUR AUFZEICHNUNG EINES DOKUMENTS MIT EINER MARKIERUNG
DEVICE AND METHOD FOR RECORDING A DOCUMENT EXHIBITING A MARKING

(30) Priorité: 28.10.2014 FR 1460357
(43) Date de publication de la demande: 06.09.2017
(73) Titulaire: Yooz, 30470 Aimargues (FR)
(72) Inventeur: PEDRENO, Jean-Marc, 30470 Aimargues (FR)
(74) Mandataire: Cornuejols, Georges
(86) Numéro de dépôt international: PCT/FR2015/052895
(87) Numéro de publication internationale: WO 2016/066951

(56) Documents cités:
- EP-A2- 1 936 944
- FR-A1- 2 956 230
- JP-A- H07 214 881
- JP-A- 2002 150 212
- US-A1- 2008 078 836

## Description

### DOMAINE TECHNIQUE DE L'INVENTION

La présente invention vise un dispositif et un procédé d'enregistrement d'un document et un tampon pour mettre en oeuvre un tel procédé. Elle s'applique, notamment, à la gestion électronique de documents.

### ETAT DE LA TECHNIQUE

Habituellement, un courrier entrant est marqué par un utilisateur au moyen d'un tampon. Le marquage représente généralement une suite de caractères alphanumériques représentant une information de date, de lieu ou d'action, par exemple. Ce marquage permet, en principe, d'identifier qu'un traitement a été réalisé sur le courrier par un utilisateur.

Avec l'avènement des technologies de l'information, les courriers et documents entrants sont généralement numérisés et mémorisés dans des serveurs locaux ou distants. Cette virtualisation de l'archivage de documents entraîne, souvent, un doublon de fichiers numérisés par deux utilisateurs différents.

Certains systèmes actuels, dits de « gestion électronique de documents », impliquent une modification de trame des documents, par incorporation d'un code-barres par exemple. Ces systèmes nécessitent de numériser les documents entrants et de classer ces documents en fonction d'un identifiant de la base de donnée, tel un identifiant d'utilisateur ou un numéro de dossier par exemple. L'inconvénient de ces systèmes est qu'ils nécessitent un traitement humain supplémentaire pour être indexés correctement dans la base de données et qu'ils n'évitent pas le risque de doublon des fichiers numérisés. Le document FR2956230 A1 divulgue un tel système.

D'autres systèmes actuels mettent en œuvre des étiquettes à coller sur le document au lieu d'un tampon. Ce marquage suit les mêmes objectifs que la technique précédente. Ces étiquettes portent généralement un code-barres représentant un identifiant. Les inconvénients de cette technique, en plus des défauts de la technique précédente, sont d'une part qu'elle engendre un coût supplémentaire de fabrication des étiquettes et d'autre part que les étiquettes sont à fond opaque ce qui cache totalement une partie du document positionnée sous l'étiquette collée.

### OBJET DE L'INVENTION

La présente invention vise à remédier à tout ou partie de ces inconvénients.

A cet effet, selon un premier aspect, la présente invention vise un dispositif d'enregistrement d'un document tel que défini par la revendication 1.

Grâce à ces dispositions, un utilisateur utilisant le dispositif peut mémoriser un document reçu, tamponné et scanné en attribuant de manière automatique le document scanné à un utilisateur sur un réseau informatique.

Le dispositif objet de la présente invention comporte un moyen d'identification du document en fonction du positionnement du marquage sur le document et d'au moins une information lue du marquage.

La présente invention permet d'identifier une similitude entre deux documents scannés présentant un contenu identique et un marquage identique en contenu et en positionnement.

Dans des modes de réalisation, lorsqu'un marquage identique est détecté à deux occasions par le détecteur, le moyen d'enregistrement est inhibé pour ne pas enregistrer le document ou ce moyen d'enregistrement enregistre ledit document en associant audit document une donnée représentative d'un enregistrement précédent d'un document présentant le marquage détecté.

Ces modes de réalisation permettent d'éviter un enregistrement de doublons lorsque deux documents scannés présentent un contenu identique et un marquage identique en contenu et en positionnement.

Le dispositif objet de la présente invention comporte un moyen de vérification d'authenticité d'un document en fonction d'une image du marquage numérisée.

L'avantage de cette invention est qu'elle permet de détecter un faux document enregistré par rapport à un document précédemment enregistré en fonction du marquage.

Dans la présente invention, le moyen de vérification d'authenticité vérifie l'authenticité d'un document en fonction du positionnement du marquage sur l'image numérisée du document.

De cette manière, si deux positionnements d'un marquage identiques sont détectés sur deux documents distincts, le moyen de vérification détermine que l'un des deux documents n'est pas authentique.

Selon un deuxième aspect, la présente invention vise un procédé d'enregistrement d'un document tel que défini par la revendication 3.

Les buts, avantages et caractéristiques du procédé objet de la présente invention étant similaires à ceux du dispositif objet de la présente invention, ils ne sont pas rappelés ici.

### BREVE DESCRIPTION DES FIGURES

D'autres avantages, buts et caractéristiques particulières de la présente invention ressortiront de la description non limitative qui suit d'au moins un mode de réalisation particulier du dispositif, du procédé et du tampon objets de la présente invention, en regard des dessins annexés, dans lesquels :
- la figure 1 représente, schématiquement et en coupe, un mode de réalisation particulier du dispositif objet de la présente invention,
- la figure 2 représente, schématiquement, un logigramme d'étapes particulier du procédé objet de la présente invention,
- la figure 3 représente, schématiquement et en coupe, un mode de réalisation particulier du tampon objet de la présente invention et
- la figure 4 représente, schématiquement et de face, un mode de réalisation particulier du marquage réalisé par le tampon objet de la présente invention.

### DESCRIPTION D'EXEMPLES DE REALISATION DE L'INVENTION

On appelle « séparateur », dans le domaine de la gestion électronique de documents, un marquage physiquement apposé sur un document permettant, lors de la détection de ce marquage, au système de gestion électronique de document, de déterminer que ce document marqué est un document différent du précédent document marqué analysé par le système. Un tel séparateur peut être formé par la simple présence d'un marquage sur le document, ou être plus complexe en étant représentatif d'informations. Un tel séparateur est alors, par exemple, une chaine de caractères représentative d'un paramètre particulier déterminé. Dans des variantes, le séparateur est un symbole présentant une forme particulière au regard des symboles mis en œuvre dans le document et/ou dans le marquage.

On appelle une « information alphanumérique paramétrée par un utilisateur », une information déterminée par un utilisateur via un dispositif de saisie de l'information, le relief du tampon, et donc la forme du marquage, dépendant de l'information déterminée. Cette information peut être déterminée, par exemple :
- prédéterminée lors de la fabrication du tampon en octroyant à un ou plusieurs reliefs la forme d'un caractère alphanumérique ou
- par la rotation de bandes munies de reliefs correspondant chacun à un caractère alphanumérique, ces bandes étant mobiles de telle manière qu'un seul relief soit positionné sur une face mise en contact avec un pigment et une surface d'un document, un tel mécanisme étant similaire à celui mis en œuvre dans un tampon numéroteur.

On utilise, dans le reste du texte, le terme d'« enregistrement » qui couvre les notions de stockage, indexation, repérage, apprentissage, identification et archivage notamment.

On note dès à présent que les figures ne sont pas à l'échelle.

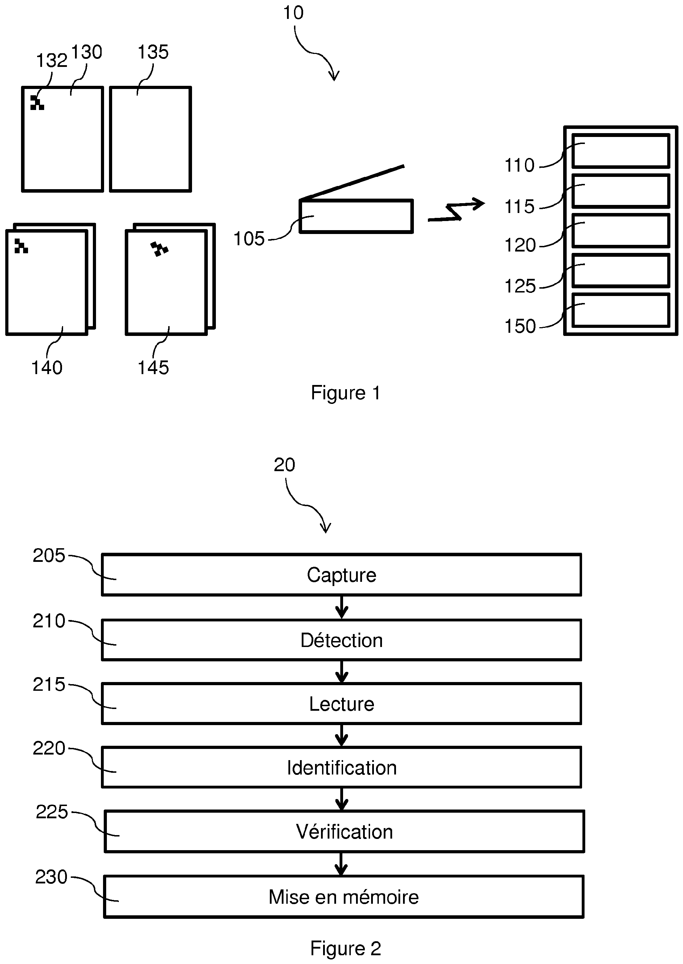

On observe, sur la figure 1, qui n'est pas à l'échelle, une vue en coupe d'un mode de réalisation du dispositif 10 objet de la présente invention. Ce dispositif 10 d'enregistrement d'un document, 130 et 135, présentant un marquage 132 réalisé par un tampon comportant au moins un relief pour mise en contact successivement avec un pigment et une surface d'un document, 130 et 135, à marquer, une forme d'au moins un dit relief étant représentative :
- d'un séparateur identifiant une première page du document,
- d'un identifiant d'utilisateur et/ou
- d'une information alphanumérique paramétrée par un utilisateur, comporte :
   - un capteur 105 d'image pour numériser le document, 130 et 135, en au moins une image,
   - un détecteur 110 du marquage 132 sur au moins une image numérisée,
   - un moyen 115 de lecture des informations, du marquage 132, représentatives :
      - de l'identifiant d'utilisateur et
      - de l'information alphanumérique,
   - un moyen 125 d'identification du document, 130 et 135, en fonction du positionnement du marquage 132 sur le document, 130 et 135, et d'au moins une information lue du marquage 132,
   - un moyen 120 d'enregistrement du document, 130 et 135, numérisé en fonction des informations lues, pour enregistrer un document, 130 et 135, identifié non précédemment enregistré et
   - un moyen 150 de vérification d'authenticité d'un document, 130 et 135, en fonction d'une image du marquage 132 numérisée.

Dans des variantes, le tampon comporte un relief, ce relief étant représentatif à la fois :
- du séparateur identifiant une première page du document,
- de l'identifiant d'utilisateur et
- de l'information alphanumérique paramétrée par un utilisateur.

Dans des variantes, le tampon comporte une pluralité de reliefs, chaque relief étant représentatif d'un élément parmi :
- le séparateur identifiant une première page du document,
- l'identifiant d'utilisateur et
- l'information alphanumérique paramétrée par un utilisateur.

Dans des variantes, le tampon comporte une pluralité de reliefs, au moins deux reliefs étant ensemble représentatifs d'au moins un élément parmi :
- le séparateur identifiant une première page du document,
- l'identifiant d'utilisateur et/ou
- l'information alphanumérique paramétrée par un utilisateur.

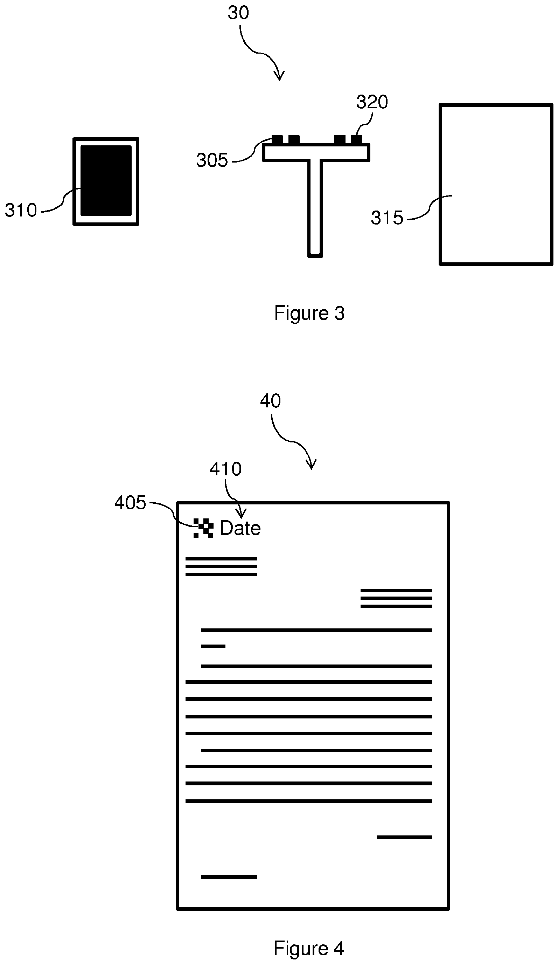

Préalablement à l'enregistrement d'un document, 130 et 135, ce document a été marqué par un tampon 30 tel que décrit en regard de la figure 3. Ce tampon 30 comporte au moins un relief pour mise en contact avec un pigment, tel de l'encre par exemple, le relief étant apposé sur la première page 130 du document pour déposer le pigment sur ladite page 130. Ce pigment forme un marquage 132, ce marquage comportant, par exemple, un ensemble de caractères alphanumériques et un code-barres bidimensionnel correspondant à un identifiant d'utilisateur.

Dans des variantes, le marquage comporte une pluralité de codes-barres bidimensionnels différents identifiant deux utilisateurs intéressés par le document. Dans d'autres variantes, le marquage comporte des redondances entre code-barres de manière à augmenter la robustesse du marquage face à l'usure du support ou une mauvaise apposition du pigment.

Dans des variantes, le marquage comporte une délimitation pour écriture manuelle. Cette délimitation est, par exemple, un ensemble de cases de largeur prédéterminée ou une zone délimitée par deux marqueurs permettant une écriture libre. Dans ces variantes, le moyen de lecture 115 met en œuvre un logiciel de traitement d'image pour détecter une chaine de caractères alphanumériques correspondant à l'écriture manuelle détectée dans la délimitation pour écriture manuelle. La chaine ainsi lue est enregistrée conjointement avec le document. Dans des variantes, l'enregistrement du document est réalisé en fonction de la chaine de caractères ainsi lue.

Le contact entre le tampon 30 et la page 130 est réalisé par un utilisateur, ce qui implique que l'orientation et le positionnement de deux marquages 132 sur deux pages identiques sont très vraisemblablement différents. Cette propriété est exploitée pour l'identification de doublon ou l'authentification de document. Un marquage 132 est positionné sur chaque première page d'un document différent, de manière à ce que le marquage 132 serve de séparateur de document automatiquement lorsque le marquage est détecté par le détecteur 110.

Dans l'exemple particulier de la figure 1, deux premières pages, 130 et 145, de deux documents différents ont été marquées par un tampon 30.

Le capteur d'image 105 numérise les pages, 130 et 135, du premier document. Ce capteur d'image 105 est, par exemple, un scanneur à plat ou à défilement intégré ou non à une télécopieuse multifonction. Dans des variantes, le capteur d'image 105 est un terminal portable actionné par un utilisateur.

L'image ainsi numérisée est transmise par le biais d'un quelconque réseau d'information, ou mémoire de stockage mobile tel une clé USB par exemple, au détecteur 110. Ce réseau d'information est, par exemple, filaire ou sans-fil, basé sur une technologie IP (abréviation de « internet protocol », traduit par « protocole internet ») ou mobile.

Le détecteur 110 est, par exemple, un logiciel de traitement d'image mis en œuvre par une unité de calcul d'un ordinateur personnel ou d'un serveur par exemple. Le détecteur 110 est configuré pour, à partir d'une image numérisée, détecter le marquage 132 sur une page par reconnaissance de forme, la matrice générale du marquage 132 étant connue du détecteur 110.

Lorsqu'un marquage 132 est détecté, le moyen de lecture 115 lit les informations d'identification d'utilisateur et des caractères alphanumériques. Dans le cas d'identifiants d'utilisateur sous forme de codes-barres bidimensionnel, le moyen de lecture 115 transcrit le code-barres en chaine de caractères alphanumérique correspondant audit identifiant. Cet identifiant sert, par la suite, à enregistrer le document dans le fichier correspondant à l'utilisateur identifié de manière automatique.

Le moyen d'identification 125 identifie un document en fonction du positionnement du marquage 132 sur le document et d'au moins une information lue du marquage. Dans des variantes, ce moyen d'identification 125 identifie un document seulement en fonction du positionnement du marquage 132. Dans d'autres variantes, le marquage 132 comporte un identifiant de document lu par le moyen de lecture 115 et permettant au moyen d'identification 125 d'identifier le document.

L'identification du document 125 est basée sur une partie du contenu du document de manière à éviter le cas où deux marquages 132 présentant une orientation et un positionnement parfaitement identiques identifient comme identiques deux documents dont le contenu diffère. Par contenu du document, on entend également une portion de l'image numérisée non traitée pour en extraire le contenu informatif.

Le moyen d'enregistrement 120 du document est, par exemple, un logiciel configuré pour écrire sur une mémoire de l'ordinateur personnel ou du serveur de manière à enregistrer le document dans un fichier correspondant à l'utilisateur relatif à l'identifiant d'utilisateur lu.

Dans l'exemple illustré en figure 1, si un utilisateur scanne un premier document, formé par les pages 130 et 135, ce document est enregistré dans un répertoire ou dans une structure de stockage électronique comme un système de Gestion Electronique de Documents par exemple correspondant à l'identifiant d'utilisateur.

Si, par la suite, le document est de nouveau scanné, le moyen d'identification 125 détecte un doublon entre le marquage de la page 140 et de la page 130, ces marquages étant identiques, et le document n'est donc pas enregistré par inhibition du moyen d'enregistrement 120 ou le moyen d'enregistrement 120 enregistre ledit document en associant audit document une donnée représentative d'un enregistrement précédent d'un document présentant le marquage détecté. Si un troisième document, présentant un même marquage 132 dans une position et selon une orientation différente, est scanné, ce document est enregistré car il ne correspond pas à un document déjà enregistré, chaque document étant identifié par le positionnement et l'orientation du marquage 132. Ce positionnement et cette orientation peuvent être transcrits dans une donnée unique enregistrée pour éviter les doublons.

Le moyen de vérification 150 d'authenticité d'un document est mis en œuvre en fonction d'une image du marquage 132 numérisée. Ce moyen de vérification 150 détermine qu'un document n'est pas authentique lorsqu'une image du contenu du document correspond avec une image du contenu d'un autre document identique et que le marquage 132 diffère en positionnement et/ou en orientation.

On observe, sur la figure 2, un logigramme d'étapes particulier du procédé 20 d'enregistrement d'un document présentant un marquage réalisé par un tampon comportant au moins un relief pour mise en contact successivement avec un pigment et une surface d'un document à marquer, une forme d'au moins un dit relief étant représentative :
- d'un séparateur identifiant une première page du document,
- d'un identifiant d'utilisateur et/ou
- d'une information alphanumérique paramétrée par un utilisateur,
qui comporte :
- une étape 205 de capture d'image pour numériser le document en au moins une image,
- une étape 210 de détection du marquage sur au moins une image numérisée,
- une étape 215 de lecture des informations, du marquage, représentatives :
   - de l'identifiant d'utilisateur et
   - de l'information alphanumérique,
- une étape 220 d'identification du document en fonction du positionnement du marquage sur le document et d'au moins une information lue du marquage,
- une étape 225 de vérification d'authenticité d'un document en fonction d'une image du marquage numérisée et
- une étape 230 d'enregistrement du document numérisé en fonction des informations lues au cours de laquelle un document non précédemment enregistré est enregistré.

L'étape de capture 205 d'image est mise en œuvre, par exemple, par un scanneur ou par un terminal portable. Au cours de cette étape de capture 205, un document est numérisé sous forme d'au moins une image.

L'étape de détection 210 est mise en œuvre par une unité de calcul d'un ordinateur personnel, d'un serveur ou d'un terminal portable d'un utilisateur par exemple. Au cours de cette étape de détection 210, un traitement d'image est réalisé sur les images numérisées du document de manière à détecter une forme correspondant au marquage.

L'étape de lecture 215 est mise en œuvre, par exemple, par un logiciel configuré pour transposer le marquage en données informatiques de types chaînes de caractères et données alphanumériques pour pouvoir être traitées par d'autres logiciels. La lecture du marquage permet d'extraire, par exemple, les informations d'identifiant d'utilisateur et alphanumériques.

L'étape d'identification 220 est mise en œuvre, par exemple, par un logiciel identifiant un document en fonction du positionnement et de l'orientation du marquage sur une page du document et/ou du contenu du document, ce contenu pouvant être une image du contenu informatif du document.

A la suite de l'étape d'identification, si le document est identifié comme déjà enregistré, l'étape d'enregistrement 230 n'est pas réalisée ou l'enregistrement dudit document est réalisé en associant audit une donnée représentative d'un enregistrement précédent d'un document similaire.

L'étape de vérification 225 est mise en œuvre, par exemple, par un logiciel de traitement d'images et/ou de lecture automatique de document configuré pour détecter un contenu identique entre deux documents mais des marquages dont la position et/ou l'orientation diffère pour déterminer l'authenticité d'un document.

L'étape d'enregistrement 230 est réalisée, par exemple, par un moyen de commande d'une mémoire locale ou distante configuré pour commander l'enregistrement du document en fonction des informations lues du marquage si ce document n'a pas déjà été enregistré. Un doublon de document est détectée par un identifiant de document attribué au document au cours de l'étape d'identification, cet identifiant dépendant de la position et/ou de l'orientation du marquage.

On observe, sur la figure 3, un exemple particulier du tampon 30 objet de la présente invention. Ce tampon 30 pour mettre en œuvre le procédé objet de la présente invention, comporte au moins un relief 305 pour être mis en contact successivement avec un pigment 310 et une surface 315 d'un document à marquer, une forme d'au moins un dit relief 305 étant représentative :
- d'un séparateur entre deux surfaces avec lesquelles le relief 305 est mis en contact,
- d'un identifiant d'utilisateur et/ou
- d'une information alphanumérique paramétrée par un utilisateur pouvant représenter, par exemple, un identifiant de document.

Le tampon 30 comporte, par exemple, un appui pour recevoir la main d'un utilisateur et pour permettre un appui du tampon 30 sur une surface 315 à marquer de manière à créer un contact entre le relief 305 et la surface 315. Le relief 305 du tampon est mis en contact avec un pigment 310, tel de l'encre par exemple, avant d'être mis en contact avec la surface 315. Dans des variantes, le pigment est intégré au tampon 30 et est stocké dans un matériau spongieux positionné sous l'appui, le relief 305 étant articulé de manière à ce qu'un appui du tampon 30 sur la surface 315 entraîne un déploiement du relief 305 pour exercer un contact sur la surface 315, le relief 305 se repliant au contact du pigment en l'absence d'appui.

Dans des variantes préférentielles, la forme d'au moins un relief 305 représentative d'un identifiant d'utilisateur présente une forme de code-barres bidimensionnel. Dans certaines de ces variantes, le tampon 30 présente une redondance de forme représentative d'un identifiant d'utilisateur entre au moins deux reliefs, 305 et 320.

Dans des variantes, le tampon 30 comporte une pluralité de formes représentatives d'identifiants d'utilisateurs, au moins deux identifiants étant différents.

Le tampon 30 comporte, par exemple, quatre reliefs en formes de codes-barres bidimensionnels délimitant un espace carré dans lequel sont positionnés les reliefs dont la forme est représentative de l'information alphanumérique. Cette information alphanumérique correspond, par exemple, à une date. Les codes-barres bidimensionnels représentent, par exemple, une information qui tient en huit caractères, l'identifiant permettant d'identifier soit le tampon 30 soit l'utilisateur du tampon 30.

Dans des variantes, une combinaison particulière et prédéterminée de caractères de l'information alphanumérique provoque, dans le dispositif 10, une absence d'enregistrement des informations contenues dans le marquage, le marquage servant alors uniquement de séparateur entre deux documents.

On observe, sur la figure 4, un exemple de document 40 marqué par un tampon 30 objet de la présente invention. Ce marquage présente d'une part un identifiant d'utilisateur 405 sous la forme d'un code-barres bidimensionnel et d'autre part une date 410.

## Revendications

1. Dispositif (10) d'enregistrement d'un document (130, 135) présentant un marquage (132) réalisé par un utilisateur au moyen d'un tampon comportant au moins un relief pour mise en contact successivement avec un pigment et une surface d'un document à marquer, une forme d'au moins un dit relief étant représentative :
- d'un séparateur de document,
- d'un identifiant et
- d'une information alphanumérique,
le dispositif comprenant en outre :
- un capteur (105) d'image pour numériser le document en au moins une image,
- un détecteur (110) du marquage sur au moins une image numérisée,
- un moyen (115) de lecture des informations, du marquage, représentatives :
- de l'identifiant d'utilisateur et
- de l'information alphanumérique
- un moyen (125) d'identification du document, (130, 135), en fonction du positionnement du marquage (132) sur le document (130, 135) et d'au moins une information lue du marquage (132),
- un moyen de vérification de la correspondance du positionnement et/ou de l'orientation du marquage du document avec le positionnement et/ou l'orientation du marquage d'un document préalablement enregistré et de la correspondance d'une image du contenu du document avec une image du contenu du document préalablement enregistré,
- un moyen d'identification d'un document non authentique si le marquage diffère et le contenu est identique, et/ou l'identification d'un nouveau document si le contenu diffère,
et
- un moyen (120) d'enregistrement du document numérisé en fonction des informations lues.

2. Dispositif (10) selon la revendication 1, dans lequel si le moyen (125) d'identification de document identifie successivement deux fois un même document, le moyen (120) d'enregistrement est inhibé pour ne pas enregistrer le doublon de document ou ce moyen d'enregistrement enregistre ledit document en associant audit document une donnée représentative d'un enregistrement précédent.

3. Procédé (20) d'enregistrement d'un document présentant un marquage réalisé par un utilisateur au moyen d'un tampon (30) comportant au moins un relief (305) pour mise en contact successivement avec un pigment (310) et une surface (315) d'un document à marquer, une forme d'au moins un dit relief étant représentative :
- d'un séparateur de document,
- d'un identifiant d'utilisateur et
- d'une information alphanumérique,
le procédé comprenant en outre :
- une étape (205) de capture d'image pour numériser le document en au moins une image,
- une étape (210) de détection du marquage sur au moins une image numérisée,
- une étape (215) de lecture des informations, du marquage, représentatives :
- de l'identifiant d'utilisateur et
- de l'information alphanumérique
- une étape (220) d'identification du document en fonction du positionnement du marquage sur le document et d'au moins une information lue du marquage
- une étape de vérification de la correspondance du positionnement et/ou de l'orientation du marquage du document avec le positionnement et/ou l'orientation du marquage d'un document préalablement enregistré et de la correspondance d'une image du contenu du document avec une image du contenu du document préalablement enregistré,
- une étape d'identification d'un document non authentique si le marquage diffère et le contenu est identique, et/ou l'identification d'un nouveau document si le contenu diffère,
et
- une étape (230) d'enregistrement du document numérisé en fonction des informations lues.

4. Procédé (20) selon la revendication 3, dans lequel, à la suite de l'étape d'identification, si le document est identifié comme déjà enregistré, l'étape d'enregistrement du document n'est pas réalisée ou l'enregistrement dudit document est réalisé en associant audit document une donnée représentative d'un enregistrement précédent du document présentant le marquage détecté.

5. Procédé (20) selon l'une des revendications 3 à 4, qui comporte une étape (225) de vérification d'authenticité d'un document en fonction d'une image du marquage numérisée.

6. Procédé (20) selon l'une des revendications 3 à 5, dans lequel la forme d'au moins un relief (305) est représentative d'un identifiant d'utilisateur présente une forme de code-barres bidimensionnel.

7. Procédé (20) selon l'une des revendications 3 à 6, dans lequel le tampon (30) comporte une redondance de forme représentative d'un identifiant d'utilisateur entre au moins deux reliefs (305, 320).

8. Procédé (20) selon l'une des revendications 3 à 7, dans lequel le tampon (30) qui comporte une pluralité de formes représentatives d'identifiants d'utilisateurs, au moins deux identifiants étant différents.

9. Procédé (20) selon l'une des revendications 3 à 8, dans lequel l'information alphanumérique est un identifiant de document.

## Patentansprüche

1. Vorrichtung (10) zur Registrierung eines Dokuments (130, 135), aufweisend eine Markierung (132), die von einem Benutzer mittels eines Stempels hergestellt wurde, aufweisend mindestens ein Relief für das aufeinanderfolgende Inkontaktversetzen mit einem Pigment und einer Oberfläche eines zu markierenden Dokuments, wobei eine Form von mindestens einem Relief repräsentativ ist für:
- ein Dokumententrennzeichen,
- eine Kennung und
- eine alphanumerische Information,
wobei die Vorrichtung ferner umfasst:
- einen Bildsensor (105), um das Dokument in mindestens einem Bild zu digitalisieren,
- einen Detektor (110) der Markierung auf mindestens einem digitalisierten Bild,
- eine Einrichtung (115) zum Lesen der Informationen der Markierung, die repräsentativ sind für:
- die Benutzerkennung und
- die alphanumerische Information
- eine Identifikationseinrichtung (125) des Dokuments (130, 135) in Abhängigkeit von der Positionierung der Markierung (132) auf dem Dokument (130, 135) und mindestens einer gelesenen Information der Markierung (132),
- eine Einrichtung zur Überprüfung der Übereinstimmung der Positionierung und/oder der Ausrichtung der Markierung des Dokuments mit der Positionierung und/oder der Ausrichtung der Markierung eines zuvor registrierten Dokuments und der Übereinstimmung eines Bildes des Inhalts des Dokuments mit einem Bild des Inhalts des zuvor registrierten Dokuments,
- eine Einrichtung zur Identifikation eines nicht authentischen Dokuments, wenn sich die Markierung unterscheidet und der Inhalt identisch ist, und/oder der Identifikation eines neuen Dokuments, wenn sich der Inhalt unterscheidet, und
- eine Einrichtung (120) zur Registrierung des digitalisierten Dokuments in Abhängigkeit von den gelesenen Informationen.

2. Vorrichtung (10) nach Anspruch 1, wobei, wenn die Dokumenten-Identifikationseinrichtung (125) aufeinanderfolgend zweimal dasselbe Dokument identifiziert, die Registrierungseinrichtung (120) gehemmt wird, um nicht das Dokumentendoppel zu registrieren oder diese Registrierungseinrichtung registriert das Dokument, indem sie dem Dokument eine Angabe zuordnet, die für eine vorhergehende Registrierung repräsentativ ist.

3. Verfahren (20) zur Registrierung eines Dokuments, aufweisend eine Markierung, die von einem Benutzer mittels eines Stempels (30) hergestellt wurde, aufweisend mindestens ein Relief (305) für das aufeinanderfolgende Inkontaktversetzen mit einem Pigment (310) und einer Oberfläche (315) eines zu markierenden Dokuments, wobei eine Form von mindestens einem Relief repräsentativ ist für:
- ein Dokumententrennzeichen,
- eine Benutzerkennung und
- eine alphanumerische Information,
wobei das Verfahren ferner umfasst:
- einen Bilderfassungsschritt (205), um das Dokument in mindestens einem Bild zu digitalisieren,
- einen Detektionsschritt (210) der Markierung auf mindestens einem digitalisierten Bild,
- einen Leseschritt (215) der Informationen der Markierung, die repräsentativ sind für:
- die Benutzerkennung und
- die alphanumerische Information
- einen Identifikationsschritt (220) des Dokuments in Abhängigkeit von der Positionierung der Markierung auf dem Dokument und mindestens einer gelesenen Information der Markierung,
- einen Überprüfungsschritt der Übereinstimmung der Positionierung und/oder der Ausrichtung der Markierung des Dokuments mit der Positionierung und/oder der Ausrichtung der Markierung eines zuvor registrierten Dokuments und der Übereinstimmung eines Bildes des Inhalts des Dokuments mit einem Bild des Inhalts des zuvor registrierten Dokuments,
- einen Identifikationsschritt eines nicht authentischen Dokuments, wenn sich die Markierung unterscheidet und der Inhalt identisch ist, und/oder der Identifikation eines neuen Dokuments, wenn sich der Inhalt unterscheidet, und
- einen Registrierungsschritt (230) des digitalisierten Dokuments in Abhängigkeit von den gelesenen Informationen.

4. Verfahren (20) nach Anspruch 3, wobei nach dem Identifikationsschritt, wenn das Dokument als bereits registriert identifiziert wurde, der Schritt der Registrierung des Dokuments nicht durchgeführt wird oder die Registrierung des Dokuments durchgeführt wird, indem dem Dokument eine Angabe zugeordnet wird, die für eine vorhergehende Registrierung des Dokuments repräsentativ ist, das die ermittelte Markierung aufweist.

5. Verfahren (20) nach einem der Ansprüche 3 bis 4, das einen Schritt (225) der Authentizitätsüberprüfung eines Dokuments in Abhängigkeit von einem digitalisierten Bild der Markierung aufweist.

6. Verfahren (20) nach einem der Ansprüche 3 bis 5, wobei die Form von mindestens einem Relief (305), die repräsentativ für eine Benutzerkennung ist, eine zweidimensionale Strichcodeform aufweist.

7. Verfahren (20) nach einem der Ansprüche 3 bis 6, wobei der Stempel (30) eine Formenredundanz aufweist, die für eine Benutzerkennung zwischen mindestens zwei Reliefs (305, 320) repräsentativ ist.

8. Verfahren (20) nach einem der Ansprüche 3 bis 7, wobei der Stempel (30) eine Vielzahl von Formen aufweist, die für Benutzerkennungen repräsentativ sind, wobei mindestens zwei Kennungen unterschiedlich sind.

9. Verfahren (20) nach einem der Ansprüche 3 bis 8, wobei die alphanumerische Information eine Dokumentenkennung ist.

## Claims

1. Device (10) for recording a document (130, 135) exhibiting a marking (132) produced by a user by means of a stamp comprising at least one relief for being successively placed in contact with a pigment and a surface of a document to be marked, one form of at least one said relief being representative of:
- a document separator;
- an identifier; and
- an alphanumeric item of information,
the device also comprising:
- an image sensor (105) for digitizing the document into at least one image;
- a detector (110) of the marking on at least one digitized image;
- a means (115) for reading information from the marking, representative of:
- the user identifier; and
- the alphanumeric item of information;
- a means (125) for identifying the document, (130, 135), as a function of the position of the marking (132) on the document, (130, 135), and at least one item of information read from the marking (132);
- a means for verifying the correspondence between the position and/or orientation of the marking of the document and the position and/or orientation of the marking of a previously recorded document, and the correspondence between an image of the content of the document and an image of the content of the previously recorded document;
- a means for identifying a non-authentic document if the marking differs and the content is identical, and/or identifying a new document if the content differs; and
- a means (120) for recording the digitized document as a function of the information read.

2. Device (10) according to claim 1, wherein, if the document identification means (125) identifies the same document twice in succession, the recording means (120) is inhibited so that the duplicate document is not recorded, or this recording means records said document, associating to said document an item of data representative of a previous recording.

3. Method (20) for recording a document exhibiting a marking produced by a user by means of a stamp (30) comprising at least one relief (305) for being successively placed in contact with a pigment (310) and a surface (315) of a document to be marked, one form of at least one said relief being representative of:
- a document separator;
- a user identifier; and
- an alphanumeric item of information,
the method also comprising:
- a step (205) of capturing the image for digitizing the document into at least one image;
- a step (210) of detecting the marking on at least one digitized image;
- a step (215) of reading information from the marking, representative of:
- the user identifier; and
- the alphanumeric item of information;
- a step (220) of identifying the document as a function of the position of the marking on the document and of at least one item of information read from the marking;
- a step of verifying the correspondence between the position and/or orientation of the marking of the document and the position and/or orientation of the marking of a previously recorded document, and the correspondence between an image of the content of the document and an image of the content of the previously recorded document;
- a step of identifying a non-authentic document if the marking differs and the content is identical, and/or identifying a new document if the content differs; and
- a step (230) of recording the digitized document as a function of the information read.

4. Method (20) according to claim 3, wherein, after the identification step, if the document is identified as being already recorded, the step of recording the document is not performed, or the recording of said document is performed, associating to said document an item of data representative of a previous recording of a document exhibiting the detected marking.

5. Method (20) according to one of claims 3 to 4, which comprises a step (225) of verifying the authenticity of a document based on an image of the digitized marking.

6. Method (20) according to one of claims 3 to 5, wherein the form of at least one relief (305) representative of a user identifier exhibits a two-dimensional bar code form.

7. Method (20) according to one of claims 3 to 6, wherein the stamp (30) comprises form redundancy representative of a user identifier between at least two reliefs (305, 320).

8. Method (20) according to one of claims 3 to 7, wherein the stamp (30) comprises a plurality of forms representative of user identifiers, at least two identifiers being different.

9. Method (20) according to one of claims 3 to 8, wherein the alphanumeric information is a document identifier.
